## Europäisches Patentamt
## European Patent Office
## Office européen des brevets

(19)

(11) Veröffentlichungsnummer: **0 251 185**
**B1**

(12) **EUROPÄISCHE PATENTSCHRIFT**

(45) Veröffentlichungstag der Patentschrift: 28.11.90

(51) Int. Cl.5: **H04L 17/16**

(21) Anmeldenummer: 87109089.0

(22) Anmeldetag: 24.06.87

(54) Verfahren zur Erkennung einer beliebigen, gerätespezifischen New Line-Sequenz für Telexmaschinen.

(30) Priorität: 27.06.86 DE 3621677

(43) Veröffentlichungstag der Anmeldung:
07.01.88 Patentblatt 88/1

(45) Bekanntmachung des Hinweises auf die Patenterteilung:
28.11.90 Patentblatt 90/48

(84) Benannte Vertragsstaaten:
CH DE FR GB IT LI SE

(56) Entgegenhaltungen:
CH-A- 327 524
DE-B- 2 640 848
US-A- 3 480 915

(73) Patentinhaber: Siemens Aktiengesellschaft,
Wittelsbacherplatz 2, D-8000 München 2(DE)

(72) Erfinder: Hirsch, Lucian, Dipl.-Ing., Deisenhofener
Strasse 21, D-8000 München 90(DE)

## Beschreibung

Die Erfindung bezieht sich auf ein Verfahren zur Erkennung einer beliebigen, gerätespezifischen New Line-Sequenz für Telexmaschinen gemäß dem Oberbegriff des Patentanspruchs 1.

Bei elektronischen Textverarbeitungsmaschinen wie Telexmaschinen (Fernschreibern) werden die Gerätefunktionen durch eine Vielzahl von fest oder dynamisch zugeordneten Tasten einer Tastatur ausgewählt. Häufig sind die Tasten auch mehrfach belegt, so daß in Abhängigkeit von der gewählten Ebenenzuordnung unterschiedliche Funktionen ausführbar sind. Die Entscheidung, welches Schriftzeichen gemeint ist, trifft der Empfänger gemäß der letzten "Umschaltung" (z.B. Buchstabenumschaltung, Ziffernumschaltung). Durch Betätigen der Tasten werden elektrische Signale erzeugt, wobei ein Sende/Empfangsbaustein die bitseriellen Codewörter in Fernschreibzeichen nach einem internationalen Telegraphenalphabet umwandelt, die anschließend zu einem fernen Teilnehmer übertragen, dort wieder decodiert und (beispielsweise mit Hilfe eines Druckers) in Schriftzeichen verwandelt werden. Häufig besteht auch die Möglichkeit, die durch die Tasten ausgewählten Funktionen auf einem Bildschirm einer Anzeigeeinheit sowohl beim Sender als auch beim Empfänger der Nachricht sichtbar zu machen. Den Codekombinationen eines solchen Fernschreibcodes sind in der Regel bestimmte Funktionen zugeordnet. Neben den alphanumerischen Zeichen (Ziffern, Buchstaben) zum Drucken von Schriftzeichen, dienen in solchen Textendgeräten verschiedene Steuerzeichen zum Ausführen bestimmter Funktionen, wie z.B. Kennungsgeberauslösung, Klingelbetätigung, Wagenrücklauf und Zeilenvorschub.

Wagenrücklauf (carriage return, Darstellung '<') und Zeilenvorschub (line feed, Darstellung '≡') sind Hauptfunktionen einer textverarbeitenden Maschine. Diese beiden Steuerfunktionen werden durch entsprechende Steuerzeichen mittels der dafür auf der Tastatur vorgesehenen Tasten für Wagenrücklauf und für Zeilenvorschub ausgewählt. Durch Betätigen beider Tasten wird die Funktion "Neue Zeile" (New Line) ausgeführt. Zur Erhöhung der Schreibleistung ist vielfach auf dem Tastenfeld eine einzelne "New Line"-Taste vorgesehen, bei deren Ansprechen sowohl die Funktion Wagenrücklauf als auch die Funktion Zeilenvorschub ausgeführt werden.

Bei den meisten Textverarbeitungssystemen wird als New Line-Funktion die Sequenz (WR ZL) angenommen. Verschiedene Textverarbeitungsmaschinen, die über eine Fernleitung in Verbindung stehen, können unterschiedliche, einstellbare New Line-Sequenzen aufweisen. Neben den darstellbaren Steuerzeichen WR und ZL, die auf einem angeschlossenen Bildschirm automatisch eingeblendet werden, kann eine New Line-Sequenz auch eine von Maschine zu Maschine verschiedene Anzahl von unsichtbaren Steuerzeichen BU für Buchstabenumschaltung, ZI für Ziffernumschaltung, K32 für Umschaltung arabische Schrift enthalten. Dies führt beispielsweise dazu, daß das Abbild einer Telexnachricht beim Empfänger nicht dem Urbild bei der sendenden Station entspricht. Auch kann nicht sichergestellt werden, daß dabei die Trennung konsekutiver aber unterschiedlicher New Line-Sequenzen in einer Telexnachricht korrekt erfolgt.

Der Erfindung liegt deshalb die Aufgabe zugrunde, ein Verfahren zur Erkennung einer beliebigen, gerätespezifischen New Line-Sequenz anzugeben, damit trotz eventuell unterschiedlicher New Line-Sequenzen der in Verbindung stehenden Textverarbeitungsmaschinen das Abbild einer Telexnachricht beim Sender und Empfänger identisch ist.

Erfindungsgemäß wird die Aufgabe bei dem Verfahren der eingangs genannten Art durch die im kennzeichnenden Teil des Patentanspruches 1 angegebenen Verfahrensschritte gelöst.

Eine vorteilhafte Weiterbildung der Erfindung ist im Unteranspruch angegeben.

Um eine korrekte Darstellung der vom Fernschreiber empfangenen Nachricht auf dem Bildschirm bzw. auf dem Drucker zu erhalten, wird der Anfang und das Ende jeder beliebigen New Line-Sequenz ermittelt. Dies ist besonders wichtig beim Auftreten von mehreren unterschiedlichen New Line-Sequenzen in einer Nachricht hintereinander.

Die innerhalb der zu analysierenden New Line-Sequenz vorhandenen, nicht darstellbaren Steuerzeichen BU, ZI, K32 beeinflussen nicht das Ergebnis der Analyse. Sie sind ein quasi "überflüssiger" Teil der New Line-Sequenz, können aber für die Anschlußtechnik in manchen älteren Telexmaschinen von Bedeutung sein.

Die New Line-Analyse beginnt, sobald das erste Zeichen Wagenrücklauf WR bzw. das erste Zeichen Zeilenvorschub ZL im Speicher gelesen worden ist. Eventuelle davorstehende Steuerzeichen BU, ZI, K32 werden als Teil der zu analysierenden New Line-Sequenz betrachtet.

Die New Line-Analyse wird beendet, sobald ein zweites Steuerzeichen Zeilenvorschub ZL oder ein darstellbares Zeichen (Buchstabe, Ziffer, Sonderzeichen) gelesen worden ist. Das Verfahren gemäß der Erfindung hat den Vorteil, daß durch eine Syntaxanalyse jede beliebige New Line-Sequenz der Form

$$1 \cdot ZL + m \cdot WR + k \cdot BU + p \cdot ZI + n \cdot K32$$

erkannt wird, wobei $m \geqq 1$; $k$, $p$, $n \geqq 0$.

Dadurch wird sichergestellt, daß sowohl das Abbild einer Telexnachricht beim Sender und Empfänger trotz unterschiedlicher New Line-Sequenzen, als auch das Abbild einer Telexnachricht auf dem Bildschirm einer Anzeigeeinheit und auf einem Aufzeichnungsträger eines Druckers identisch ist. Außerdem ermöglicht das Verfahren die korrekte Trennung mehrerer hintereinander auftretender, aber unterschiedlicher New Line-Sequenzen.

Im folgenden wird das Verfahren gemäß der Erfindung anhand von Zeichnungen näher erläutert. Es zeigen

Figur 1 ein Blockschaltbild einer Anordnung von zwei miteinander in Kommunikation stehenden Telexmaschinen, FS1 und FS2

Figur 2 einen Ausschnitt einer bezüglich der New Line-Sequenz zu analysierenden Nachricht und

Figur 3 ein Flußdiagramm zur Analyse einer New Line-Sequenz.

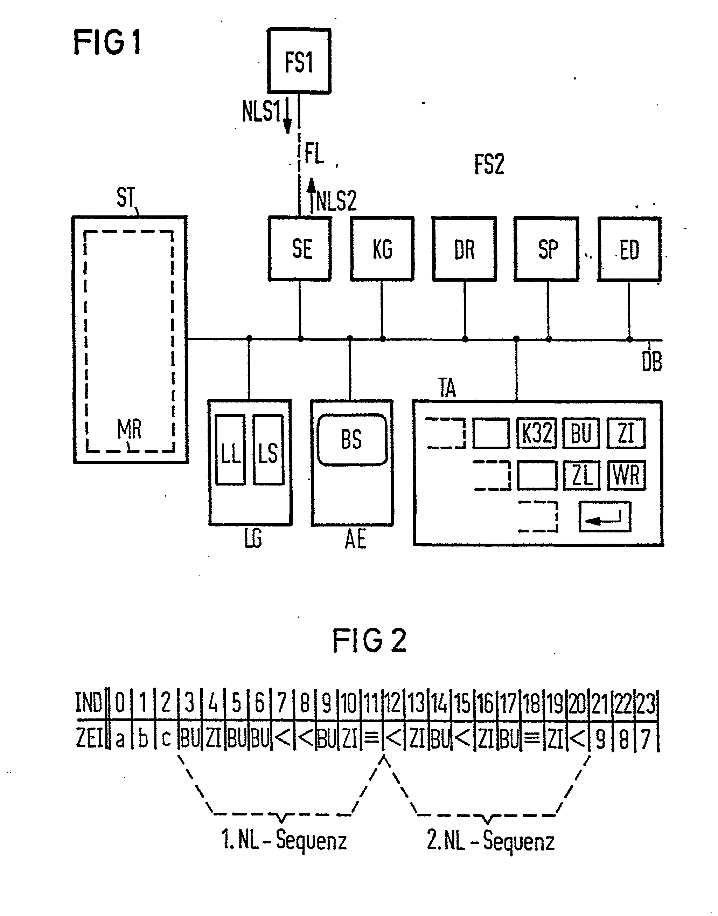

Bei der in Figur 1 als Übersichtsplan dargestellten Textverarbeitungsmaschine, die beispielsweise als Fernschreibmaschine FS2 ausgebildet ist, ist eine zentrale Steuerung ST mit einem Mikrorechner MR realisiert. Schnittstellen zwischen der zentralen Steuerung ST und den einzelnen Ein- und Ausgabebaugruppen sind in diesem Fall als Mikrorechnerbusschnittstellen ausgebildet. An einem Datenbus DB ist eine Tastatur TA, eine mit einem Bildschirm BS versehene Anzeigeeinheit AE, ein Drucker DR und ein Speicher SP angeschlossen, der beispielsweise als Diskettenspeicher ausgebildet ist. Über eine Sende/Empfangseinheit SE ist eine Fernleitung FL angeschlossen, die zu einem Fernschreiber FS1 führt.

Weiters ist an den Datenbus DB noch ein Editor ED und ein Kennungsgeber KG angeschlossen, mit dem sich die Fernschreibteilnehmer gegenseitig identifizieren können, sowie ein Lochstreifengerät LG, das als Lochstreifenlocher LL und als Lochstreifenleser LS ausgebildet ist. Die Tastatur TA weist neben den Tasten für die alphanumerischen Zeichen einige Tasten für Steuerzeichen auf, und zwar unter anderem Wagenrücklauf WR, Zeilenvorschub ZL, Buchstabenumschaltung BU, Ziffernumschaltung ZI, New Line ⌐ und Umschaltung für ein zweites Alphabet, z.B. Arabisch K32. Der Fernschreiber FS1 sendet über die Fernleitung FL u.a. eine New Line-Sequenz NLS1 zum Sende/Empfangsbaustein SE des Fernschreibers FS2, der wiederum im allgemeinen eine von der New Line-Sequenz NLS1 verschiedene New Line-Sequenz NLS2 erzeugt und sendet.

Figur 2 zeigt beispielsweise eine Nachricht, die von der Fernschreibmaschine FS2 empfangen wurde. Mit Hilfe der Tastatur TA wird die gespeicherte Nachricht in den Editor ED geladen, zeilenweise analysiert und auf einen Bildschirm BS oder auf einen Drucker DR ausgegeben. Bei der Darstellung der Nachricht findet die Zeilenanalyse statt, wobei auch die New Line-Sequenzen erkannt werden müssen.

In der ersten Tabellenzeile dieser Nachricht stehen die mit Index IND bezeichneten Speicheradressen 0 bis 23, in der zweiten Tabellenzeile stehen die mit dem Zeichen ZEI gekennzeichneten entsprechenden Inhalte (Nachricht) der jeweiligen Speicheradressen. Die Analyse der ersten Zeile dieser Nachricht beginnt damit, daß ausgehend vom Index IND=0 die Zeichen im Speicher gelesen werden. Der Index IND wird jedesmal um 1 erhöht und bei Index IND=7 wird das erste Zeichen für Wagenrücklauf WR gelesen. Eine logische Variable "WR-gefunden" wird jetzt auf TRUE gesetzt. Da vor diesem Zeichen WR nicht darstellbare Steuerzeichen vorhanden sind (Speicheradressen 3 bis 6), wird als Merker für den Beginn der New Line-Sequenz eine Variable "NL-Beginn" auf 3 gesetzt.

Bei Index IND=8 wird wieder ein Zeichen WR gelesen. Dieses Zeichen erfährt aber keine besondere Behandlung, da die Variable "WR-gefunden" schon wahr ist. Bei Index IND=9 wird das Zeichen BU, bei Index IND=10 das Zeichen ZI gelesen. Das erste Zeichen ZL wird bei IND=11 gelesen. Eine logische Variable "ZL-gefunden" wird jetzt auf TRUE (wahr) gesetzt. Damit wäre die minimale New Line-Konfiguration erreicht (die Variablen "WR-gefunden" und "ZL-gefunden" sind beide wahr).

Die Analyse wird aber fortgesetzt, da keine der beiden Endbedingungen für die New Line-Analyse, nämlich Vorhandensein eines zweiten Zeichens ZL oder Vorhandensein eines darstellbaren Zeichens ≠ WR und ≠ ZL erfüllt ist. Es könnte sich um eine New Line-Sequenz der Art Wagenrücklauf, Zeilenvorschub, Wagenrücklauf handeln. Bei Index IND=12 wird wieder ein Zeichen WR gelesen. Da sowohl die Variable "WR-gefunden" als auch die Variable "ZL-gefunden" wahr sind und das jetzige Zeichen WR das erste WR hinter ZL ist, wird eine Variable "Index-WR-hinter-ZL" auf 12 (aktueller Index) gesetzt. Diese Variable ist wichtig bei der Trennung eventueller mehrerer konsekutiver New Line-Sequenzen. Bei Index IND=13 wird das Steuerzeichen ZI, bei Index IND=14 das Steuerzeichen BU gelesen. Beim nächsten Index IND=15 wird wieder ein Zeichen WR gelesen. Dieses Zeichen WR erfährt keine besondere Behandlung, da die Variable "WR-gefunden" schon wahr ist und dies nicht das erste WR hinter ZL ist. Bei Index IND=16 wird das Steuerzeichen ZI, bei Index IND=17 das Steuerzeichen BU gelesen. Das zweite ZL wird bei Index IND=18 gelesen, d.h. es treten zwei New Line-Sequenzen hintereinander auf. Damit ist die New Line-Analyse für die erste Zeile beendet (Endbedingung "zweites ZLvorhanden" ist erfüllt) und die Festlegung der ersten New Line-Sequenz findet statt. Die New Line-Sequenz beginnt entsprechend dem Wert der Variable "NL-Beginn"=3. Die Variable "Index-WR-hinter-ZL" markiert den Anfang einer folgenden New Line-Sequenz, also das erste New Line endet bei "Index-WR-hinter-ZL-1" (=11).

Die Darstellung der ersten Zeile sieht damit wie folgt aus: a b c ⌐.

Die Analyse für die zweite Zeile beginnt bei Index IND=12 (hinter der jetzt schon festgelegten vorherigen Zeile), wobei alle verwendeten Variablen zunächst initialisiert werden (die logischen Variablen auf falsch und die Indexvariablen auf 0 gesetzt). Bei Index IND=12 wird das erste Zeichen WR für die aktuelle Zeile gelesen, also die Variable "WR-gefunden" wird auf TRUE und die Variable "NL-Beginn" auf 12 gesetzt (diese Zeile beginnt direkt mit einem WR). Als nächstes wird bei Index IND=13 ein Steuerzeichen ZI, bei Index IND=14 ein Steuerzeichen BU gelesen. Bei Index IND=15 wird wieder ein Zeichen WR gelesen. Wiederum keine besondere Behandlung für dieses Zeichen, da die Variable"WR-gefunden" schon wahr ist. Bei Index IND=16 wird das Steuerzeichen ZI, bei Index IND=17 das Steuerzeichen BU gelesen. Das erste Zeichen ZL für die aktuelle Zeile wird bei Index IND=18 gelesen. Die logische Variable "ZL-gefunden" wird jetzt auf TRUE (wahr) gesetzt. Die minimale New Line-Konfiguration wäre schon erreicht (Variable "WR-gefunden" und Variable "ZL-gefunden" sind beide wahr). Die Analyse geht aber weiter, da keine der oben bereits erwähnten Endbedingungen erfüllt ist. Nach Index IND=19, bei dem ein Steuerzeichen ZI gelesen wird, tritt bei Index IND=20 wieder ein WR auf. Da sowohl die Variable "WR-gefunden" als auch "ZL-gefunden" wahr sind und das jetzige WR das erste hinter ZL ist, wird die Variable "Index-WR-hinter-ZL" auf 20 (aktueller Index) gesetzt. Bei Index IND=21 wird das erste darstellbare Zeichen hinter der New Line-Sequenz gelesen, d.h. die New Line-Analyse für die zweite Zeile ist beendet, da die Endbedingung "darstellbares Zeichen ≠ WR und ≠ ZL gelesen" erfüllt ist. Die New Line Sequenz beginnt entsprechend dem Wert der Variablen "NL-Beginn"=12 und endet vor dem jetzt gelesenen darstellbaren Zeichen, also bei 20. Auf dem Bildschirm bzw. auf dem Drucker wird die gesamte Nachricht entsprechend Figur 2 als

a b c ⟵⎯⎯⎯⏌

⟵⎯⏌
9 8 7

dargestellt.

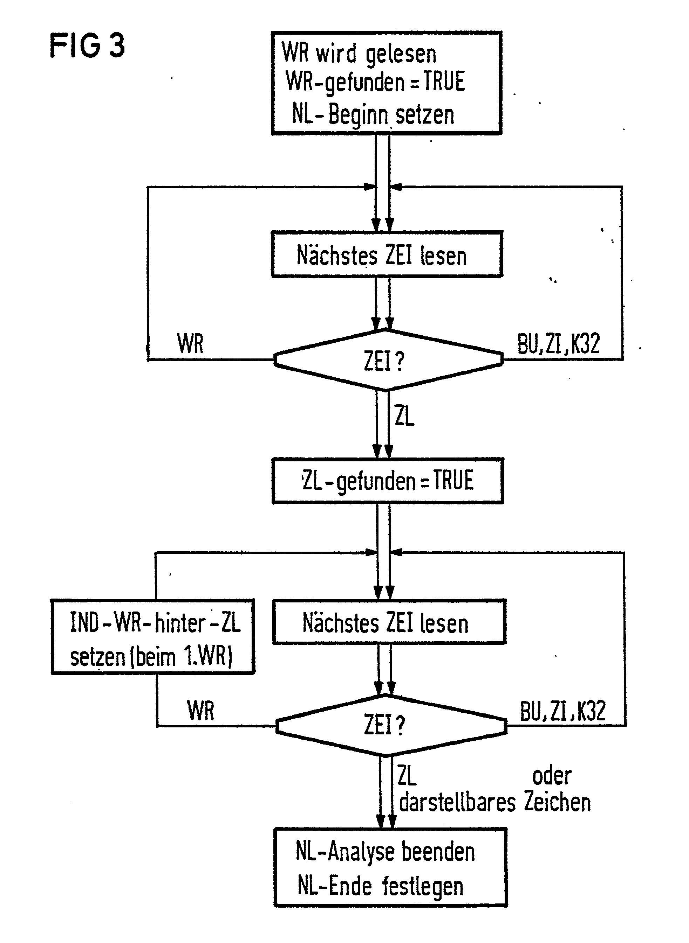

Figur 3 zeigt den Ablauf einer Analyse anhand eines Flußdiagrammes für eine New Line-Sequenz, die mit dem Zeichen Wagenrücklauf WR beginnt. Das erste Zeichen WR wird gelesen und eine logische Variable "WR-gefunden" auf TRUE gesetzt, gleichzeitig wird eine Variable "NL-Beginn" entsprechend dem aktuellen Index gesetzt. Daraufhin wird das nächste Zeichen ZEI gelesen. Ist das Zeichen ZEI ein nicht darstellbares Steuerzeichen BU, ZI, K32 oder ein weiteres Zeichen WR, wird das nächste Zeichen gelesen, während beim Auftreten eines Zeichens ZL eine logische Variable "ZL-gefunden" auf TRUE gesetzt wird. Wird als nächstes ein Zeichen WR gelesen, so wird, da die beiden logischen Variablen "WR-gefunden" und "ZL-gefunden" bereits TRUE sind, eine Variable "Index-WR-hinter-ZL" auf den aktuellen Index (Index, bei der das Zeichen auftritt) gesetzt. Ist das gelesene Zeichen ein Steuerzeichen BU, ZI, K32, so wird das nächste Zeichen gelesen und der Index wiederum um 1 erhöht. Im Falle des Auftretens eines Zeichens ZL oder eines darstellbaren Zeichens (Buchstabe, Ziffer, Sonderzeichen), so ist die New Line-Analyse beendet und das New Line-Ende wird festgelegt.

## Patentansprüche

1. Verfahren zum Erkennen einer beliebigen, gerätespezifischen New Line-Sequenz für Telexmaschinen, insbesondere Fernschreibmaschinen, wobei die New Line-Sequenz aus darstellbaren Steuerzeichen Wagenrücklauf WR, Zeilenvorschub ZL und aus nicht darstellbaren Steuerzeichen Buchstabenumschaltung BU, Ziffernumschaltung ZI und Umschaltung auf zweites Alphabet K32 besteht, gekennzeichnet dadurch, daß zwischen zwei darstellbaren Zeichen (nicht Wagenrücklauf WR und nicht Zeilenvorschub ZL) eine Syntaxanalyse der New Line-Sequenz durchgeführt wird, wobei in folgenden Verfahrensschritten:

a) die New Line-Analyse beginnt, sobald das erste Zeichen Wagenrücklauf (WR) bzw. das erste Zeichen Zeilenvorschub "ZL" gelesen wird,

b) jedem gelesenen Zeichen ein Index (IND) zugeordnet wird, der beim Lesen des nächsten Zeichens um 1 erhöht wird,

c) den Zeichen Wagenrücklauf (WR) und Zeilenvorschub (ZL) logische Variable zugeordnet werden, die beim erstmaligen Lesen dieser Zeichen (WR, ZL) auf einen definierten Zustand gesetzt werden,

d) beim Lesen des ersten darstellbaren Zeichens (WR) oder (ZL) eine logische Variable für den NL-Beginn entsprechend dem zugehörigen Index (IND) gesetzt wird,

e) bei erneutem Lesen eines Zeichens Wagenrücklauf (WR) nach bereits erfolgtem Lesen eines Zeichens (WR) und (ZL) eine logische Variable "Index-WR-hinter-ZL" auf den aktuellen Index (IND) gesetzt wird,

f) falls als nächstes Zeichen ein Zeichen Wagenrücklauf (WR) gelesen wird, dieses wie ein nicht darstellbares Zeichen (BU, ZI, K32) nur zur Erhöhung des Index (IND) um 1 führt,

g) die New Line-Analyse beendet wird, sobald ein zweites Zeichen Zeilenvorschub (ZL) oder ein darstellbares Zeichen Wagenrücklauf (WR) und nicht Zeilenvorschub (ZL) gelesen wird,

h) bei Index IND+1 die New Line-Analyse für die nächste Zeile beginnt, wobei alle vorhandenen Variablen initialisiert werden.

2. Verfahren nach Anspruch 1, dadurch gekennzeichnet, daß vor dem ersten gelesenen Zeichen (WR) oder (ZL) vorhandene Steuerzeichen (BU, ZI, K32) als Teil der zu analysierenden New Line-Sequenz betrachtet werden.

## Claims

1. Method for recognizing any new line sequence, specific for an apparatus, for telex machines, preferably teleprinters, the new line sequence comprising the displayable control characters of carriage return WR, line feed ZL and non-displayable control characters of letter shift BU, figures shift ZI and shift to second alphabet K32, characterized in that a syntax analysis of the new line sequence is carried out between two displayable characters (not carriage return WR and not line feed ZL), in which, in the following method steps:

a) the new line analysis begins as soon as the first carriage return (WR) character or the first line feed "ZL" character is read,

b) each character read is assigned an index (IND), which is incremented by 1 when the next character is read,

c) logic variables are assigned to the carriage return (WR) and line feed (ZL) characters, which logic variables are set to a defined state when these characters (WR, ZL) are read for the first time,

d) a logic variable for the NL beginning is set in accordance with the associated index (IND) when the first displayable character (WR) or (ZL) is read,

e) a logic variable "index-WR-following-ZL" is set to the current index (IND) when a carriage return (WR) character is read again after a character (WR) and (ZL) has already been read,

f) if a carriage return (WR) character is read as next character, like a non-displayable character (BU, ZI, K32), this only leads to incrementation of the index (IND) by 1,

g) the new line analysis is terminated as soon as a second line feed (ZL) character or a displayable carriage return (WR) character and not line feed (ZL) is read, and

h) the new line analysis for the next line begins at index IND+1, all variables present being initialized.

2. Method according to claim 1, characterized in that control characters (BU, ZI, K32) present before the first character (WR) or (ZL) read are interpreted as part of the new line sequence to be analysed.

## Revendications

1. Procédé pour reconnaître une séquence "nouvelle ligne" quelconque, spécifique à un appareil, pour des appareils télex, notamment des télescripteurs, la séquence "nouvelle ligne" étant constituée par des signaux de commande pouvant être représentés: retour chariot WR, avance d'un interligne ZL, et par des signaux de commande qui ne peuvent pas être représentés: commutation de lettres BU, commutation de chiffres ZI et commutation sur un second alphabet K32, caractérisé par le fait que une analyse de syntaxe de la séquence "nouvelle ligne" est exécutée entre deux caractères pouvant être représentés, (à savoir pas de retour chariot WR et pas d'avance d'un interligne ZL),

a) l'analyse de la nouvelle ligne commence dès que le premier signe de retour chariot (WR) ou le premier signe d'avance d'un interligne (ZL) est lu,

b) à chaque signe lu est associé un indice (IND), qui est augmenté de 1 lors de la lecture du signe immédiatement suivant,

c) aux signes de retour chariot (WR) et d'avance d'un interligne (ZL) sont associées des variables logiques, qui sont positionnées dans un état défini, lors de la première lecture de ces signes (WR, ZL),

d) lors de la lecture du premier signe (WR) ou (ZL) pouvant être représenté, une variable logique est positionnée pour le début de la "nouvelle ligne" NL, conformément à l'indice (IND) associé:

e) lors d'une nouvelle lecture d'un signe de retour chariot (WR) après une lecture déjà réalisée d'un signe (WR) et (ZL), une variable logique "indice WR derrière ZL" est réglé sur l'indice actuel (IND),

f) dans le cas de la lecture d'un signe de retour chariot (WR) en tant que signe immédiatement suivant, ceci conduit uniquement à l'accroissement de l'indice (IND) de 1, comme avec un signe (BU, ZI, K32) qui ne peut pas être représenté,

g) l'analyse de la "nouvelle ligne" est terminée dès qu'un second signe d'avance d'un interligne (ZL) ou un signe de retour chariot (WR) pouvant être représenté et un signe pas d'avance d'un interligne (ZL) est lu,

h) pour l'indice (IND+ 1), l'analyse de la nouvelle ligne commence pour la ligne immédiatement suivante, auquel cas toutes les variables présentes sont initialisées.

2. Procédé suivant la revendication 1, caractérisé par le fait que l'on considère des signes de commande (BU, ZI, K32), présents avant le premier signe lu (WR) ou (ZL), en tant que partie de la séquence "nouvelle ligne" devant être analysée.

EP 0 251 185 B1

# FIG 1

# FIG 2

| IND | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|-----|---|---|---|---|---|---|---|---|---|---|----|----|----|----|----|----|----|----|----|----|----|----|----|----|
| ZEI | a | b | c | BU | ZI | BU | BU | < | < | BU | ZI | = | < | ZI | BU | < | ZI | BU | = | ZI | < | 9 | 8 | 7 |

1. NL - Sequenz          2. NL - Sequenz

**FIG 3**